# EUROPÄISCHE PATENTSCHRIFT

(11) **EP 2 944 520 B1**
(45) Veröffentlichungstag und Bekanntmachung des Hinweises auf die Patenterteilung: **28.03.2018**
(21) Anmeldenummer: 15159444.7
(22) Anmeldetag: 21.07.2010
(51) Int. Cl.: B60R 22/02, B60R 22/405, B60R 22/41

(54) **GURTAUFROLLER FÜR EINEN FAHRZEUGSICHERHEITSGURT**
BELT RETRACTOR FOR AN AUTOMOBILE SEATBELT
ENROULEUR DE CEINTURE POUR UNE CEINTURE DE SÉCURITÉ DE VÉHICULE

(30) Priorität: 21.07.2009 DE 102009034048
(43) Veröffentlichungstag der Anmeldung: 18.11.2015
(62) Teilanmeldung aus: 10741908.7
(73) Patentinhaber: Key Safety Systems, Inc., Sterling Heights, MI 48314 (US)
(72) Erfinder: Specht, Martin, 82340 Feldafing (DE); Wolff, Rainer, 82346 Andechs (DE)
(74) Vertreter: Eisenführ Speiser

(56) Entgegenhaltungen:
- EP-A1- 0 543 520
- EP-A1- 1 634 781
- DE-A1-102006 037 544
- FR-A1- 2 667 032
- US-A- 5 505 400
- US-A1- 2009 057 470
- US-B1- 6 334 628

## Beschreibung

Die Erfindung betrifft einen Gurtaufroller für einen Fahrzeugsicherheitsgurt nach dem Oberbegriff des Patentanspruches 1, wie aus der US 5 505 400 A bekannt. Ein derartiger Gurtaufroller ist beispielsweise aus EP 1 003 654 B1 bekannt. Der bekannte Gurtaufroller besitzt eine Gurtspule, auf welche der Sicherheitsgurt beim Bandaufwickeln aufgerollt und von welcher der Sicherheitsgurt bei Gurtbandauszug abgewickelt werden kann. Ferner weist der Gurtaufroller eine gurtbandsensitive Blockiereinrichtung, welche bei einem Gurtbandauszug mit überhöhter Beschleunigung den Gurtbandauszug blockiert, auf. Die gurtbandsensitive Einrichtung besitzt eine an der Gurtspule gegen die Kraft einer Feder beweglich gelagerte Trägheitsmasse, sowie eine ebenfalls an der Gurtspule gelagerte gurtbandsensitive Klinke, welche durch die bei überhöhter Beschleunigung veranlasste Bewegung der Trägheitsmasse in eine Blockierstellung bewegt wird. Auch aus DE 199 51 791 A1 ist ein derartiger Gurtaufroller bekannt.

Während bei diesen bekannten Gurtaufrollern beim Aufrollen des Sicherheitsgurtes auf die Gurtspule die gurtbandsensitive Klinke und die Trägheitsmasse durch Federvorspannung außer Blockiereingriff gehalten werden und somit ein durch die gurtbandsensitive Blockiereinrichtung unbehindertes Aufrollen des Sicherheitsgurte erreicht wird, ist bei einem aus EP 0 273 584 bekannten Gurtaufroller eine zusätzliche Hemmungseinrichtung vorgesehen, welche beim Bandaufwickeln des Sicherheitsgurtes auf die Gurtspule eine Aktivierung der gurtbandsensitiven Blockiereinrichtung verhindert. Die bekannte scheibenförmig mit entsprechenden Eingriffsausnehmungen für die Blockierklinke ausgebildete Hemmungseinrichtung dreht sich dabei synchron mit der gleichen Drehgeschwindigkeit wie die Gurtspule, so dass während des gesamten Bandaufwickelvorganges die gurtbandsensitive Blockiereinrichtung außer Betrieb gesetzt ist. Am Ende des Bandaufwickelvorgangs wird die gurtbandsensitive Blockiereinrichtung für ihre Aktivierung wieder freigegeben.

Da zur Erzielung eines möglichst raschen Bandaufwickelvorganges der Sicherheitsgurt mit relativ hoher Drehzahl der Gurtspule aufgewickelt wird, ergibt sich am Ende des Bandaufwickelvorgangs ein abruptes Stoppen der Gurtspulendrehung. Hierdurch besteht die Gefahr, dass die gurtbandsensitive Blockiereinrichtung aktiviert wird und ein Gurtbandauszug verhindert wird. Auch bei einem raschen Ziehen am Sicherheitsgurt bei Gurtbandauszug zum Anlegen des Sicherheitsgurtes kann es zu einer Aktivierung der gurtbandsensitiven Blockiereinrichtung und damit zur Blockierung eines weiteren Gurtbandauszugs kommen. Auch beim Nachvorneklappen von Sitzrückenlehnen, in die der Sicherheitsgurt ganz oder teilweise integriert ist, kann es zu einer überhöhten Beschleunigung des Gurtbandauszuges und damit zur Aktivierung der gurtbandsensitiven Blockiereinrichtung kommen.

Aufgabe der Erfindung ist es, einen Gurtaufroller der eingangs genannten Art zu schaffen, bei dem ohne Beeinträchtigung der Sicherheitsfunktionen beim Anlegen des Sicherheitsgurtes ein unbehinderter Gurtbandauszug erreicht wird.

Diese Aufgabe wird durch die Merkmale des Patentanspruches 1 gelöst. Die Unteransprüche beinhalten vorteilhafte Weiterbildungen der Erfindung.

Beim erfindungsgemäßen Gurtaufroller ist eine Hemmungseinrichtung vorgesehen, welche mit der Gurtspule in Drehverbindung steht, wobei die Hemmungseinrichtung am Anfang des Gurtbandauszugs während einer bestimmten Gurtbandauszugslänge die Aktivierung der gurtbandsensitiven Blockiereinrichtung verhindert. In bevorzugter Weise dreht sich die Hemmungseinrichtung mit Untersetzung mit, so dass am Anfang des Gurtbandauszugs bis zu einer bestimmten Gurtbandauszugslänge eine gurtbandsensitive Blockierung des Sicherheitsgurtes verhindert wird.

In vorteilhafter Weise kann die Hemmungseinrichtung eine um die Gurtspulenachse mit der untersetzten Drehzahl bewegte Kreissegmentbahn aufweisen, entlang welcher die mit der Gurtspule mit der gleichen Drehzahl wie die Gurtspule mitdrehende gurtbandsensitive Sperreinrichtung, insbesondere Klinke zum Verhindern einer die Blockierung einleitenden Bewegung geführt wird.

Hierzu kann die Hemmungseinrichtung eine Anschlagfläche aufweisen, entlang welcher zur Verhinderung der die Blockierung einleitenden Bewegung die an der Anschlagfläche anliegende gurtbandsensitive Sperreinrichtung, insbesondere Klinke geführt wird. Die Anschlagfläche erstreckt sich auf einer Kreissegmentbahn um die Gurtspulenachse.

Hierzu kann die gurtbandsensitive Klinke ein Anschlagelement aufweisen. Es ist auch möglich die Kreissegmentbahn, entlang welcher die gurtbandsensitive Sperreinrichtung, insbesondere Klinke geführt wird, als kreissegmentförmige Eingriffsbahn, in welche ein in der Klinke oder der Sperreinrichtung vorgesehenes Eingriffselement eingreift, auszubilden.

Die bestimmte Bandauszugslänge am Anfang des Bandauszugs ist so bemessen, dass bei am Fahrzeuginsassen angelegtem Sicherheitsgurt die Aktivierung der gurtbandsensitiven Blockiereinrichtung wieder möglich ist. Dementsprechend sind die Länge der Kreissegmentbahn in der Hemmungseinrichtung, entlang welcher die gurtbandsensitive Sperreinrichtung zur Verhinderung der Blockierung geführt wird, und die zwischen der Gurtspulendrehung und der Drehung der Hemmungseinrichtung, insbesondere der Kreissegmentbahn wirkende Untersetzung entsprechend aufeinander abgestimmt. Beispielsweise kann während drei bis fünf Gurtspulenumdrehungen je nach Einbauverhältnissen im Fahrzeug die gurtbandsensitive Blockiereinrichtung durch die Hemmungseinrichtung inaktiv gehalten werden.

In vorteilhafter Weise ist bereits unmittelbar bei Beginn des Bandauszugs die Aktivierung der gurtbandsensitiven Blockiereinrichtung verhindert. Das bedeutet, dass auch am Ende, d. h. beim Stoppen des Bandaufwickelvorgangs die gurtbandsensitive Blockiereinrichtung durch die Hemmungseinrichtung inaktiv gehalten wird. Hierdurch wird beim abrupten Stoppen des Bandaufwickelvorgangs (Bandeinzugs) in die Parkposition eine Aktivierung der gurtbandsensitiven Blockiereinrichtung verhindert.

In vorteilhafter Weise ist zur Erzielung der gegenüber der Gurtspulendrehung untersetzten Drehung der Hemmungseinrichtung ein Untersetzungsgetriebe zwischen die Gurtspule und die Hemmungseinrichtung geschaltet. Dieses Untersetzungsgetriebe kann ein um die Gurtspulenachse drehbares Antriebsrad sowie ein vom Antriebsrad angetriebenes Steuerrad aufweisen. Antriebsrad und Steuerrad sind vorzugsweise als Zahnräder ausgebildet, wobei durch entsprechende Bemessung der Verzahnungsdurchmesser die Untersetzung erreicht wird. Das Steuerrad dreht dabei mit gegenüber der Gurtspule verringerter Drehzahl, welche auf die mitgedrehte Hemmungseinrichtung und insbesondere auf die kreissegmentförmige Führungsbahn der Hemmungseinrichtung übertragen wird.

Das Untersetzungsverhältnis und die Länge der Kreissegmentbahn in der Hemmungseinrichtung sind so bemessen, dass die Aktivierung der gurtbandsensitiven Blockiereinrichtung bis zu einer Bandauszugslänge verhindert wird, welche annähernd für das Angurten des Fahrzeuginsassen erforderlich ist. Ferner kann die Aktivierung der gurtbandsensitiven Blockiereinrichtung bis zu einer Bandauszugslänge verhindert werden, welche im Falle eines ganz oder teilweise im Sitz integrierten Sicherheitsgurtes beim Umklappen der Sitzrückenlehne von der Gurtspule abgezogen wird. Insbesondere kann es sich hierbei auch um einen im Fontbereich des Fahrzeugs zur Vergrößerung des Kofferraums vorgesehenen Fahrzeugsitz oder eine dort angeordnete Sitzbank handeln. Der erfindungsgemäße Gurtaufroller eignet sich bevorzugt für die Verwendung bei Fahrzeugsitzen, welche zur Vergrößerung des Gepäckraumes im Fahrzeug klappbar und insbesondere im Laderaumboden versenkbar vorgesehen sind. Bei derartigen Fahrzeugsitzen sind häufig an beiden Sitzseiten Gurtschlösser vorgesehen. Der dazugehörige Gurtaufroller besitzt an seinem Sicherheitsgurt zwei Steckzungen, von denen die eine Steckzunge in das eine Gurtschloss, insbesondere in das Gurtschloss, welches sich an der Seite befindet, an welcher der Gurtaufroller angeordnet ist, und die andere Steckzunge zur Bildung eines angelegten Dreipunktsicherheitsgurtes in das auf der anderen Sitzseite befindliche Gurtschloss eingesteckt werden. Beim Lösen des Sicherheitsgurtes wird häufig nur eine der beiden Steckzungen aus dem Gurtschloss gelöst, so dass eine Steckzunge in einem der Gurtschlösser, insbesondere in dem Gurtschloss, welches an der Sitzseite liegt, an welcher sich auch der Gurtaufroller am Fahrzeugsitz, insbesondere in der Sitzlehne oder am Fahrzeugaufbau, insbesondere im Dachbereich befindet. Damit beim Klappen und insbesondere beim Versenken des Sitzes, bei welchem auch die Gurtschlösser mit verschwenkt werden, das Ausziehen des Sicherheitsgurtes aus dem Gurtaufroller unbehindert erfolgen kann, wirkt die Hemmungseinrichtung in der oben beschriebenen Weise auf die gurtbandsensitive Blockiereinrichtung. Erfindungsgemäß ist eine zweite Hemmungseinrichtung vorgesehen, welche die Aktivierung der fahrzeugsensitiven Blockiereinrichtung am Anfang des Gurtbandauszugs während einer bestimmten Gurtbandauszugslänge verhindert. Dabei wird die Bewegung der zweiten Hemmungseinrichtung durch die Drehung der Gurtspule über ein zweites Getriebe, insbesondere Untersetzungsgetriebe gesteuert. Vorzugsweise wirkt dabei die Hemmungseinrichtung auf die fahrzeugsensitive Blockiereinrichtung parallel und zeitgleich mit der Hemmungseinrichtung, welche auf die gurtbandsensitive Blockiereinrichtung einwirkt.

In bevorzugter Weise sind die drehbaren Bestandteile der Hemmungseinrichtung für die gurtbandsensitive Blockiereinrichtung und des zugeordneten Getriebes und/oder der Hemmungseinrichtung für die fahrzeugsensitive Blockiereinrichtung und des zugeordneten Getriebes an einem gemeinsamen Wellenteil und an einem Gehäuseteil, insbesondere Gehäusekappe drehbar gelagert. Hierdurch wird ein vereinfachter Zusammenbau der jeweiligen Hemmungseinrichtung und insbesondere beider Hemmungseinrichtungen und des zugeordneten Getriebes oder der zugeordneten Getriebe im Gehäuseteil ermöglicht. Die so im Gehäuseteil, insbesondere in der auf den Rahmen des Gurtaufrollers aufsetzbaren Gehäusekappe, vormontierte Anordnung kann dann mit der Mechanikseite des Gurtaufrollers, welcher die gurtbandsensitive und/oder fahrzeugsensitive Blockiereinrichtung aufweist, lagegerecht verbunden werden.

Die Einwirkung der Hemmungseinrichtung, sowohl bei der gurtbandsensitiven Blockiereinrichtung, als auch bei der fahrzeugsensitiven Blockiereinrichtung ist derart, dass die beweglichen Teile der jeweiligen Blockiereinrichtung ortsfest fixiert sind, so dass Geräusche, welche von diesen Teilen herrühren können, gedämmt sind.

Anhand der Figuren wird an Ausführungsbeispielen die Erfindung noch näher erläutert. Es zeigt:
- Fig. 1: eine gurtbandsensitive Blockiereinrichtung eines Gurtaufrollers mit einem Ausführungsbeispiel einer Hemmungseinrichtung, mit welcher die Aktivierung der gurtbandsensitiven Blockiereinrichtung während einer bestimmten Gurtbandauszugslänge verhindert wird, in Explosivdarstellung;

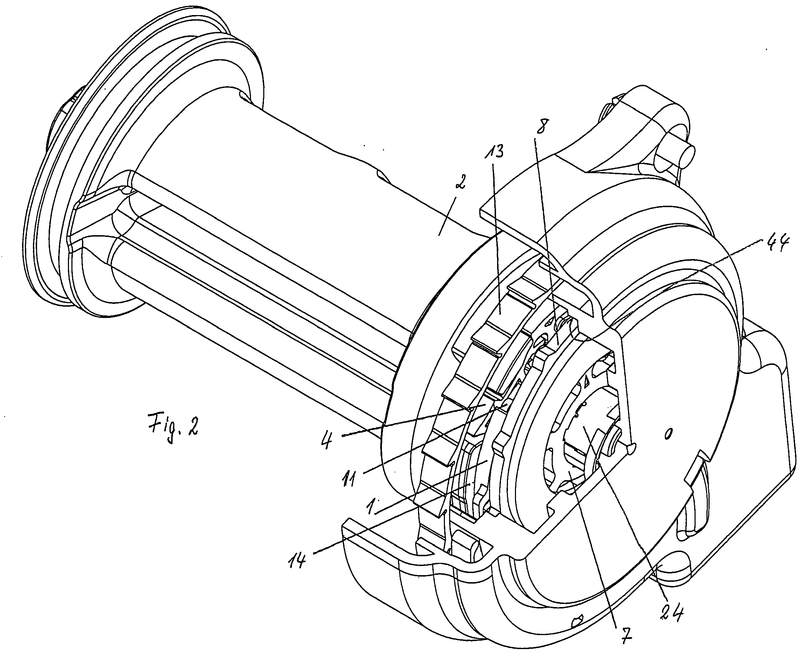

- Fig. 2: das Ausführungsbeispiel in zusammengebautem Zustand in perspektivischer Ansicht von schräg rechts oben;

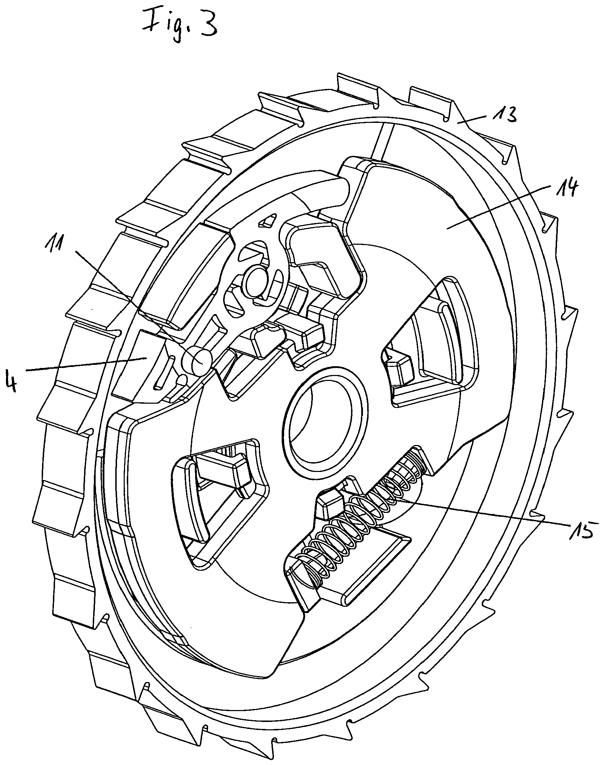

- Fig. 3: die gurtbandsensitive Blockiereinrichtung mit einer an die Erfindung angepassten Klinke als Ausführungsbeispiel;
- Fig. 4: in schnittbildlicher Darstellung ein Ausführungsbeispiel in zusammengebauten Zustand, bei welchem auch eine Hemmungseinrichtung für die fahrzeugsensitive Blockiereinrichtung vorgesehen ist;
- Fig. 5: eine Explosivdarstellung das in Figur 4 dargestellten Ausführungsbeispiels;
- Fig. 6: eine schnittbildliche Darstellung entlang einer Schnittebene A-A in Figur 4;
- Fig. 7: eine schnittbildliche Darstellung entlang einer Schnittebene B-B in Figur 4; und
- Fig. 8: eine schematische Darstellung der Anordnung zweier Gurtschlösser und des Gurtaufrollers, insbesondere bei der Verwendung von dem Ladeboden eines Fahrzeugs mit versenkbaren Fahrzeugsitzen

Die in den Figuren dargestellten Ausführungsbeispiele zeigen an der Mechanikseite eines Gurtaufrollers für einen Fahrzeugsicherheitsgurt eine gurtbandsensitive Blockiereinrichtung 12 und eine Hemmungseinrichtung 1, mit welcher am Anfang des Gurtbandauszugs während einer bestimmten Gurtbandauszugslänge die Aktivierung der gurtbandsensitiven Blockiereinrichtung 12 verhindert wird.

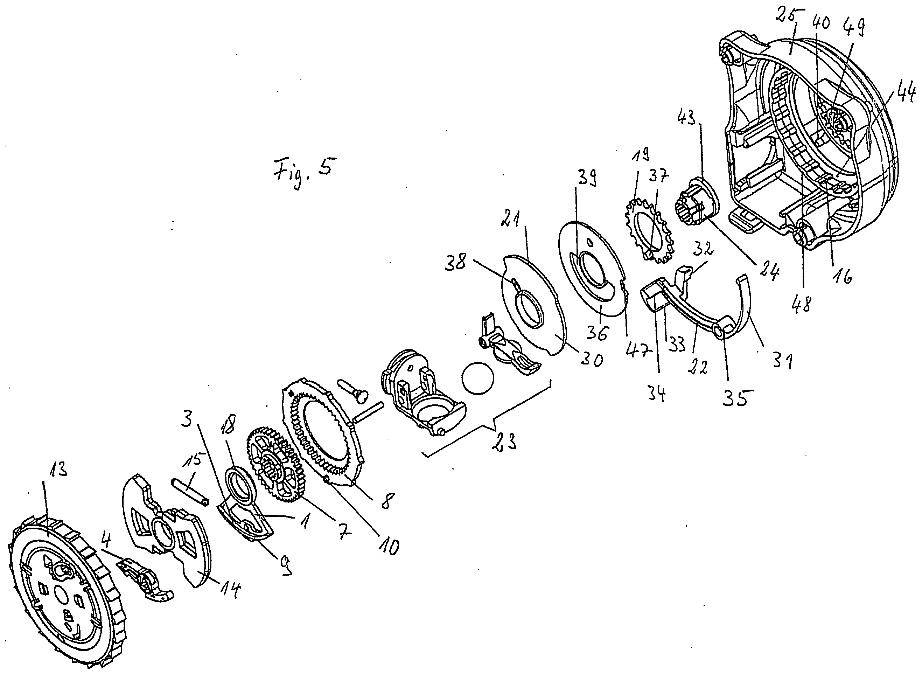

Die gurtbandsensitive Blockiereinrichtung 12 beinhaltet eine an einer Gurtspule 2 des Gurtaufrollers beweglich, insbesondere schwenkbar gelagerte Trägheitsmasse 14, welche mit Hilfe einer Feder 15 in eine entriegelte Stellung vorgespannt wird. Die Trägheitsmasse 14 wirkt mit einer Steuerfläche auf eine gurtbandsensitive Klinke 4, welche ebenfalls beweglich an der Gurtspule 2 gelagert ist. Es ist auch möglich anstelle der Klinke ein anderes geeignetes Eingriffsteil zu verwenden oder die Klinke bzw. das Eingriffsteil einstückig mit der Trägheitsmasse auszubilden. Hierdurch wird eine gurtbandsensitive Sperreinrichtung gebildet. Bei Drehung der Gurtspule 2 mit überhöhter Drehbeschleunigung bewegt sich die Trägheitsmasse 14 gegen die Kraft der Feder 15 und rückt die Klinke 4 in einen Blockiereingriff mit einer Blockierinnenverzahnung 16 (Figur 5). Diese Blockierverzahnung 16 kann an einem ortsfesten Gehäuseteil 25 des Gurtaufrollers oder einem Steuerteil, auf welches die Drehbewegung der Gurtspule infolge des Klinkeneingriffs zur Betätigung einer Hauptblockierklinke übertragen wird, vorgesehen sein. Die Hauptblockierklinke greift dabei in ein mit der Gurtspule drehfest verbundenes Klinkenrad 13. Eine derart wirkende gurtbandsensitive Blockiereinrichtung und Hauptblockiereinrichtung sind beispielsweise aus EP 1 003 654 B1 bekannt.

Die Hemmungseinrichtung 1 besteht beim Ausführungsbeispiel aus einer kreissektorförmigen Platte, an welcher eine kreissegmentförmige Führungsbahn in Form einer Anschlagsfläche 3 vorgesehen ist. Die Hemmungseinrichtung 1 ist drehbar um eine Gurtspulenachse 6, um welche auch die Gurtspule 2 beim Bandaufwickeln und Gurtbandauszug sich dreht, gelagert. Die eine Führungsbahn bildende Anschlagfläche 3 erstreckt sich im Wesentlichen parallel zur Gurtspulenachse 6 und verläuft auf einem Kreissegmentbogen um die Gurtspulenachse 6. Die Hemmungseinrichtung 1 befindet sich beim dargestellten Ausfürhungsbeispiel zwischen der gurtbandsensitiven Blockiereinrichtung 12 und dem Untersetzungsgetriebe 5.

An der gurtbandsensitiven Klinke 4 ist ein Anschlagelement 11 in Form eines Anschlagstiftes angeformt, welcher während einer bestimmten Gurtbandauszugslänge am Anfang des Gurtbandauszugs zur Anlage gebracht werden kann. Hierdurch wird, wie im Einzelnen noch erläutert wird, die Aktivierung der gurtbandsensitiven Blockiereinrichtung 12 verhindert.

Die Anschlagfläche 3 bildet eine Führungsbahn, entlang welcher das Anschlagelement 11 geführt wird. Anstelle der Anschlagfläche 3 kann die Führungsbahn an der Hemmungseinrichtung 1 auch durch eine kreissegmentförmige Eingriffsstelle, beispielsweise Eingriffsnut gebildet sein, in welche ein entsprechend ausgebildetes Eingriffselement an der Klinke 4 anstelle des stiftförmigen Anschlagelementes 11 eingreift. Anstelle der plattenförmigen Ausbildung der Hemmungseinrichtung 1 können auch Verbindungsstege oder ein Verbindungsrahmen vorgesehen sein mit welchem die kreissegmentförmige Führungsbahn um die Gurtspulenachse 6 drehbar gelagert ist.

Zur Übertragung der Drehbewegung der Gurtspule 2 auf die Hemmungseinrichtung 1 dient ein Untersetzungsgetriebe 5. Dieses besteht aus einem Antriebsrad 7, welches drehbar um die Gurtspulenachse 6 gelagert ist und in Antriebsdrehverbindung mit der Gurtspule 2 über eine Antriebswelle 17 steht. An dieser Antriebswelle 17 oder an einem Wellenteil 24 kann die Hemmungseinrichtung 1 mit einem Ringlager 18 drehbar gelagert sein. Das Untersetzungsgetriebe 5 weist ferner ein Steuerrad 8 auf, welches seine Drehbewegung auf die Hemmungseinrichtung 1 überträgt. Das Antriebsrad 7 ist als Innenrad und das Steuerrad 8 ist als Außenrad ausgebildet. Beim dargestellten Ausführungsbeispiel steht das Antriebsrad 7 mit seiner Außenverzahnung in drehmomentübertragendem Eingriff mit der Innenverzahnung des Steuerrades 8. Beim Drehantrieb des Antriebsrads 7, welches über die Antriebswelle 17 drehfest mit der Gurtspule 2 verbunden ist, wird das Steuerrad 8 mit verringerter Drehzahl gedreht, wobei die Drehachse des Steuerrades 8 sich exzentrisch um die Gurtspulenachse 6 bewegt. Hierzu ist am Gehäuseteil 25 eine innen umlaufende exzentrische Führungsfläche 44 vorgesehen. Für die Übertragung der Drehbewegung auf die Hemmungseinrichtung 1 ist am Steuerrad 8 ein Mitnehmerstift 10 vorgesehen, welcher in ein an der Hemmungseinrichtung 1 vorgesehenes Langloch 9 eingreift. Auf diese Weise wird die Drehverbindung zwischen dem Steuerrad 8 und der Hemmungseinrichtung 1 hergestellt.

Das Untersetzungsgetriebe 5 kann auch eine andere Konstruktion aufweisen. Beispielsweise kann zwischen dem Antriebsrad 7 und dem Steuerrad 8 ein Zwischenrad vorgesehen sein, wobei das Steuerrad 8, dann auch um die Gurtspulenachse 6 drehbar gelagert sein kann. In diesem Fall kann die Führungsbahn, insbesondere Anschlagsfläche 3 auch am Steuerrad 8 angeordnet sein.

Beim dargestellten Ausführungsbeispiel befindet sich die Klinke 4 am Ende des Bandaufwickelvorgangs und am Anfang des Gurtbandauszugs in Eingriff mit der kreissegmentförmigen Führungsbahn, welche an der Hemmungseinrichtung 1 durch die Anschlagfläche 3 verkörpert wird. Beim Gurtbandauszug wird die Gurtspule um die Gurtspulenachse 6 gedreht. Diese Drehbewegung wird mit der gleichen Drehzahl auf das Antriebsrad 7 übertragen. Aufgrund der unterschiedlichen Durchmesser der Verzahnungen am Antriebsrad 7 und am Steuerrad 8 wird das Steuerrad 8 mit verminderter Drehzahl mitgedreht, wobei wie schon erläutert sich seine Drehachse exzentrisch um die Gurtspulenachse 6 bewegt. Durch den Dreheingriff, welcher zwischen dem Steuerrad 8 und der Hemmungseinrichtung 11 mit Hilfe des sich bezüglich der Gurtspulenachse 6 radial erstreckenden Langloches 9 und des darin eingreifenden Mitnehmerstiftes 10 gebildet wird, wird die Drehbewegung mit verminderter Drehzahl auf die Hemmungseinrichtung 1 übertragen.

Aufgrund der unterschiedlichen Durchmesser der Verzahnungen am Antriebsrad 7 und am Steuerrad 8, wird die Drehbewegung der Gurtspule 2 mit Untersetzung auf die Hemmungseinrichtung 1 übertragen. Während des Gurtbandauszugs ist die Klinke 4 über das stiftförmige Anschlagelement, welches sich ebenfalls parallel zur Gurtspulenachse 6 erstreckt, in Anlage an der Anschlagfläche 3. Die Klinke 4 und das Anschlagelement 11 drehen sich mit der gleichen Drehzahl wie die Gurtspule 2, während die kreissegmentförmige Anschlagfläche 3 sich mit dem gegenüber verringerter Drehzahl ebenfalls um die Gurtspulenachse 6 dreht. Die Untersetzung sowie die Länge der kreissegmentförmigen Führungsbahn an der Anschlagfläche 3 sind so bemessen, dass beginnend mit dem Gurtbandauszug während einer bestimmten Gurtbandauszugslänge, die geringer ist als die für das Angurten des Fahrzeuginsassen benötigte Gurtbandauszugslänge, die Klinke 4 durch den Eingriff an der Anschlagfläche 3, außer Eingriff mit der Blockierinnenverzahnung 16 gehalten wird. Diese dabei bewirkte Inaktivierung der gurtbandsensitiven Blockiereinrichtung erfolgt unabhängig von der Beschleunigung, mit welcher der Gurtbandauszug durchgeführt wird. Bei Erreichen der vorbestimmten Gurtbandauszugslänge verlässt das stiftförmige Anschlagelement 11 die Anschlagfläche 3, sodass die gurtbandsensitive Blockiereinrichtung 12 insbesondere bei am Fahrzeuginsassen angelegtem Sicherheitsgurt aktiviert werden kann.

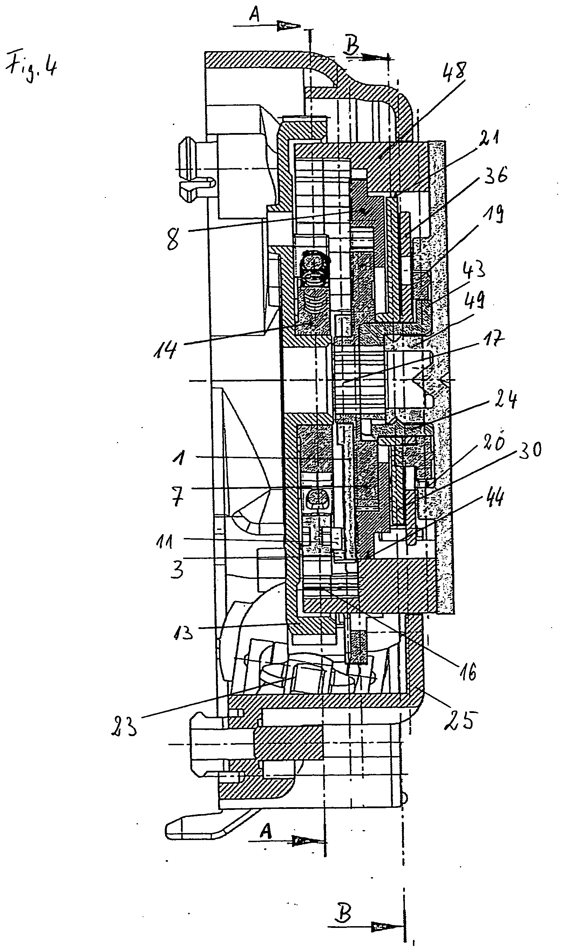

Da die Hemmungseinrichtung 1 zur Deaktivierung der gurtbandsensitiven Blockiereinrichtung zwischen der Parkposition, welche bei vollständig aufgewickeltem Sicherheitsgurt vorliegt, und einer bestimmten Gurtbandauszugslänge, welche annähernd der Gurtbandauszugslänge für das Angurten des Sicherheitsgurtes benötigt wird, oder einer geringeren Gurtbandauszugslänge wirksam ist, kann die erfindungsgemäße Hemmungseinrichtung auch bei solchen Gurtaufrollern zum Einsatz gebracht werden, bei denen eine Kindersitzverriegelung oder eine Verriegelung von voluminösen Gegenständen mit Hilfe des Sicherheitsgurtes erreicht werden soll. Derartige Gurtaufroller sind beispielsweise aus DE 199 51 791 oder aus EP 0 625 449 A1 bekannt. Hierzu kann, wie anhand der Figuren 4 und 5 noch erläutert wird, eine um die Gurtspulenachse 6 drehbare Steuerscheibe 36 vorgesehen sein, die mit einem Betätigungselement 22 zusammenwirkt. Die Verriegelung wird dabei mittels eines am Betätigungselement 22 vorgesehenen Eingriffsteils 34, welches am Klinkenrad 13 in Eingriff kommt, herbeigeführt.

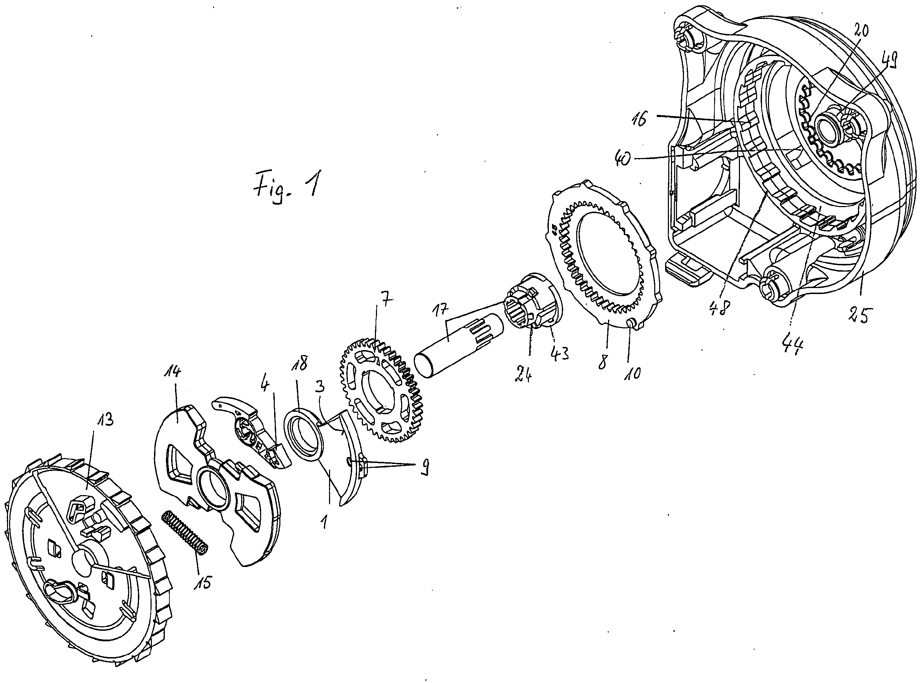

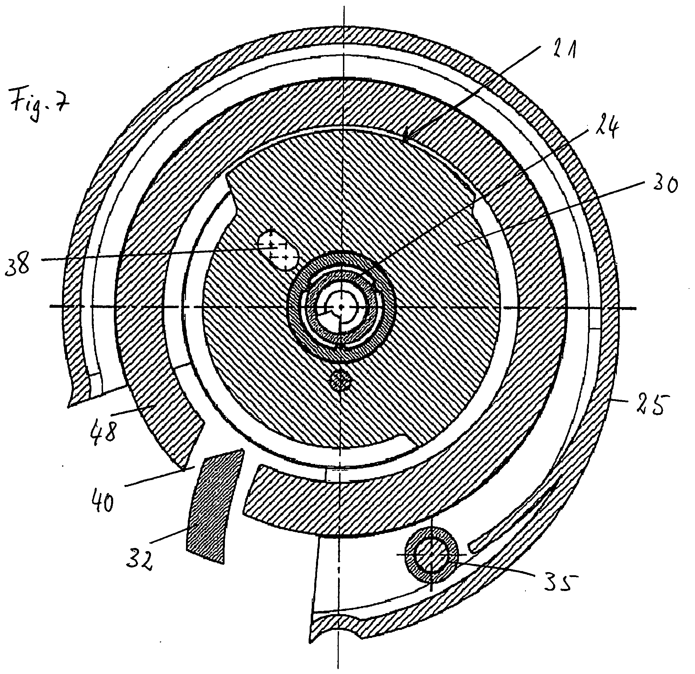

Bei dem in den Figuren 4 bis 7 dargestellten Ausführungsbeispiel ist zusätzlich zu der Hemmungseinrichtung 1 für die gurtbandsensitive Blockiereinrichtung 12, wie sie in Figur 1 dargestellt ist, eine zweite Hemmungseinrichtung, im Wesentlichen bestehend aus einer an einer Steuerscheibe 30 vorgesehenen Steuerfläche 21, welche mit dem Betätigungselement 22 zusammenwirkt, vorgesehen. Diese zweite Hemmungseinrichtung wirkt deaktivierend auf eine fahrzeugsensitive Blockiereinrichtung 23. Diese Deaktivierung der fahrzeugsensitiven Blockiereinrichtung 23 erfolgt zeitgleich mit der oben erläuterten Deaktivierung der gurtbandsensitiven Blockiereinrichtung.

Zur Steuerung der zweiten Hemmungseinrichtung ist ein Getriebe vorgesehen, welches die Drehbewegung der Gurtspule 2 auf die Steuerscheibe 30 überträgt. Dieses Getriebe besteht aus einem Antriebsrad 19 und einem Innenzahnkranz 20, welcher an der Innenseite des Gehäuseteils 25 vorgesehen ist. Das Antriebsrad 19 ist drehbar auf dem Wellenteil 24 an einem Exzenter 43 dieses Wellenteils gelagert. Die Drehbewegung der Gurtspule 2 wird über das Wellenteil 24 auf das Antriebsrad 19 übertragen, wobei aufgrund der exzentrischen Lagerung das Antriebsrad 19 um die Gurtspulenachse 6 eine exzentrische Bewegung ausführt und dabei mit seinem Außenzahnkranz in Eingriff mit dem Innenzahnkranz 20 steht. Auf diese Weise erreicht man eine Untersetzung der Drehzahl der Gurtspule 2 mit Hilfe des Getriebes, da der Durchmesser des Innenzahnkranzes 20 größer ist als der Durchmesser des Außenzahnkranzes des Antriebsrades 19. Die Drehbewegung des Antriebsrades 19 wird über einen Mitnehmerstift 37, der in ein Langloch 38 an der Steuerscheibe 30 eingreift auf die Steuerscheibe 30 und die Steuerfläche 21, welche als vorspringende Kante am Umfang der Steuerscheibe 30 ausgebildet ist, übertragen.

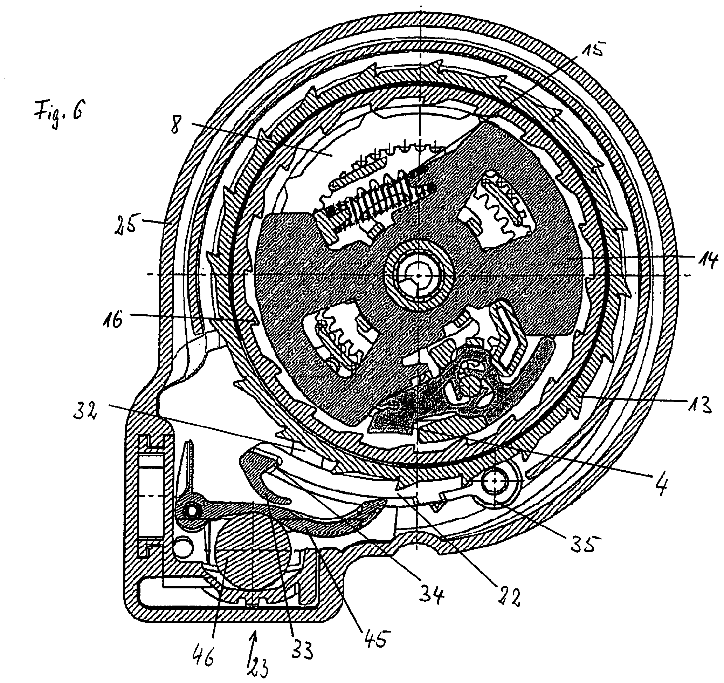

Die an der Steuerscheibe 30 in Form einer Nockenfläche oder Nockenkante vorgesehene Steuerfläche 21 besitzt einen größeren Durchmesser als der übrige Teil der Steuerscheibe 30. Die Steuerscheibe 30 ist drehbar um die Gurtspulenachse 6, vorzugsweise am Wellenteil 24, gelagert. Bei der Deaktivierung der fahrzeugsensitiven Blockiereinrichtung 23, welche in den Figuren 4 bis 7 dargestellt ist, wird die Steuerscheibe 30 soweit gedreht, dass ein Steuerabgriff 32 am Betätigungselement 22 mit der Steuerfläche 21 in Eingriff kommt. Dabei wird, wie es in Figur 6 dargestellt ist, dass Betätigungselement 22 um seine am Gehäusteil 25 vorgesehene Drehlagerung 35 geschwenkt, so dass ein am Betätigungsteil 22 vorgesehenes Eingriffsteil 33 eine Sperrklinke 45 der fahrzeugsensitiven Blockiereinrichtung 23 außer Eingriff mit der Außenverzahnung des drehfest mit der Gurtspule 2 verbundenen Klinkenrades 13 hält. Dabei wird auch eine als Kugel ausgebildete Trägheitsmasse 46 so weit in ihre Aufnahme eingedrückt, dass eine Bewegung verhindert wird. Auf diese Weise wird bei der geschilderten Deaktivierung der fahrzeugsensitiven Blockiereinrichtung 23 eine Geräuschdämmung erreicht, da die beweglichen Teile dieser Blockiereinrichtung durch die zweite Hemmungseinrichtung in unbeweglichem Zustand gehalten werden. Dies gilt im Übrigen auch für die beweglichen Teile der gurtbandsensitiven Blockiereinrichtung, bei welcher die Klinke 4 und die damit zusammenwirkende Trägheitsmasse 14 durch die Hemmungseinrichtung 1 in unbeweglichem Zustand gehalten werden.

Das Betätigungsteil 22 ist als Hebel ausgebildet, welcher im Drehlager 35 am Gehäuseteil 25 gelagert ist. Mit Hilfe einer am Gehäuseteil 25 abgestützten Feder 31, welche als Plattfeder ausgebildet sein kann, wird das Betätigungsteil 22 in Richtung auf den Umfang der Steuerscheibe 30 zu, vorgespannt. Es kann eine anders gestaltete Federvorspannung, beispielsweise eine Spiralfeder oder federelastisches Material, vorgesehen sein. Am zum Drehlager 35 entgegengesetzten Ende des Hebels sind am Betätigungselement 22 das Eingriffsteil 33, welches, wie oben erläutert, mit der fahrzeugsensitiven Blockiereinrichtung 23 in Verbindung tritt, sowie das Eingriffsteil 34 vorgesehen, welches mit der Außenverzahnung des Klinkenrades 13 in Verbindung treten kann. Hierdurch wird die oben schon erwähnte Kindersitzverriegelung veranlasst. Dabei ragt der Steuerabgriff 32 in eine am Umfangsrand der Steuerscheibe 36 vorgesehene Ausnehmung 47 (Fig. 5). Um einen unbehinderten Gurtbandauszug für die Kindersitzverriegelung zu erreichen, ist in dieser Steuerscheibe 36 eine kreissektorförmige Ausnehmung 39 vorgesehen, durch welche der Mitnehmerstift 37 ragt.

Das Betätigungselement 22 ist am Gehäusteil 25 außerhalb eines im Wesentlichen zylindrisch geformten Vorsprunges 48, der an der Innenwand des Gehäuseteils 25 vorgesehen ist, angeordnet. An der Innenseite dieses zylindrischen Vorsprunges 48 befinden sich die Blockierinnenverzahnung 16 und die exzentrische Führungsfläche 44 (Fig. 1 und 5) für das Steuerrad 8, um den Steuerabgriff 32 mit den beiden Steuerscheiben 30 und 36 in Verbindung bringen zu können, ragt der Steuerabgriff 32 durch eine Gehäuseausnehmung 40 im zylindrischen Vorsprung 48.

Für eine gemeinsame Drehlagerung der Bestandteile der Hemmungseinrichtung für die gurtbandsenstive Blockiereinrichtung und/oder der Hemmungseinrichtung für die fahrzeugsensitive Blockiereinrichtung und um einen vereinfachten Zusammenbau dieser Bestandteile im Gehäuseteil 25 zu gewährleisten, sind diese Bestandteile bevorzugt an dem gemeinsamen Wellenteil 24 gelagert. Dieses vorzugsweise als Hohlwelle ausgebildete Wellenteil 24 ist seinerseits drehbar an einem mit der Gurtspulenachse 6 ausgerichteten Achsstummel 49, welcher von der Innenwand in das Innere des Gehäuseteils 25 vorspringt, drehbar gelagert. Das Wellenteil 24 steht in Drehantriebsverbindung mit der Gurtspule 2. Dies kann über die Antriebswelle 17 erfolgen.

Das Gehäuseteil 25 ist bevorzugt als auf einem Rahmen 41 des Gurtaufrollers aufsteckbares kappenförmiges Gehäuseteil ausgebildet. Aufgrund dieser besonderen Ausbildung können alle um die Gurtspulenachse 6 drehbaren Teile der jeweiligen Hemmungseinrichtung und des jeweils zugeordneten Getriebes im Gehäuseteil 25 auf dem Wellenteil 24 vormontiert werden.

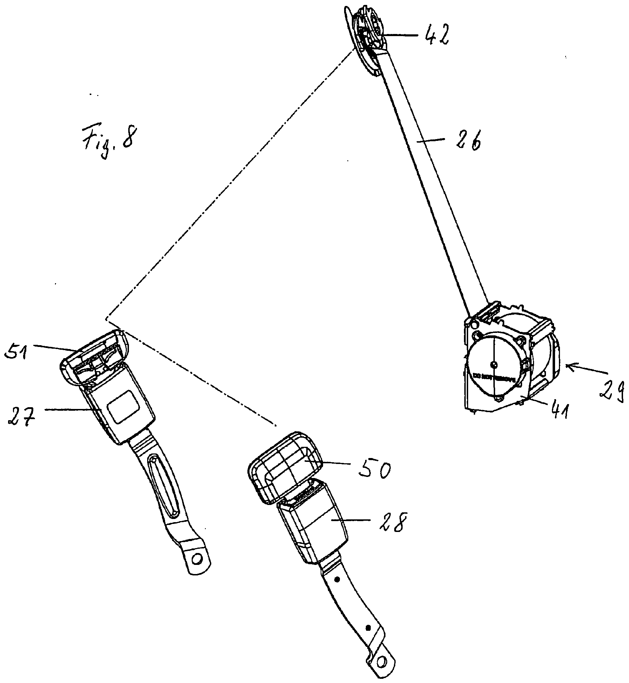

Wie anhand der Figur 8 erläutert wird, kommt ein Gurtaufroller 29 mit einer erfindungsgemäßen Hemmungseinrichtung für die gurtbandsensitive Blockiereinrichtung und mit einer Hemmungseinrichtung für die fahrzeugsensitive Blockiereinrichtung bei einem Fahrzeugsitz bevorzugt zur Anwendung, welcher zur Vergrößerung des Gepäckraumes im Fahrzeug klappbar und insbesondere in der Bodenfläche des Gepäckraumes versenkbar ist. Bei derartigen Fahrzeugsitzen sind zu beiden Seiten der Sitzfläche Gurtschlösser 27 und 28 (Fig. 8) vorgesehen. Der Gurtaufroller 29 kann in der Sitzlehne oder im Bereich der Sitzlehne oder auch im Bereich des Fahrzeugaufbaus, insbesondere im Dachbereich oder in der Nähe davon angeordnet sein. Der Sicherheitsgurt 26 ist mit zwei Steckzungen 50, 51 ausgestattet, von denen die eine Steckzunge 50 am Gurtbandende befestigt ist und die andere Steckzunge 51 am Sicherheitsgurt 26 verschiebbar gelagert ist. Die am Ende des Sicherheitsgurtes 26 befestigte Steckzunge 50 wird in das Gurtschloss 28 eingesteckt, welches an der Sitzseite sich befindet, an welcher auch der Gurtaufroller 29 im Fahrzeug angeordnet ist. Bei dem in Figur 8 dargestellten Ausführungsbeispiel wird die am Ende des Sicherheitsgurtes 26 befindliche Steckzunge 50 in das Gurtschloss 28 eingesteckt. Hierdurch wird am Ende des Sicherheitsgurtes 26 eine Fixierung erreicht, wie bei einem normalen Endbeschlag eines Dreipunktsicherheitsgurtes. Beim Angurten wird die Steckzunge 51 in das auf der anderen Sitzseite befindliche Gurtschloss 27 eingesteckt, so dass eine Dreipunktsicherheitsgutanordnung erreicht wird. Der Sicherheitsgurt 26 kann dabei direkt vom Gurtaufroller 29 oder über eine gegebenenfalls höhenverstellbare Umlenkeinrichtung 42 zu den Gurtschlössern 27 und 28 geführt werden.

In vielen Fällen löst der Fahrzeuginsasse beim Ablegen des Sicherheitsgurtes nur die Steckzunge 51 aus dem Gurtschloss 27 und vergisst die Steckzunge 50 auch aus dem Gurtschloss 28 zu entfernen. Wenn beim Umklappen des Fahrzeugsitzes und insbesondere beim Versenken des Fahrzeugsitzes im Gepäckbodenbereich die Gurtschlösser 27 und 28 mit verschwenkt werden, wird der Sicherheitsgurt 26 vom Gurtaufroller 29 abgezogen. Hierbei besteht die Gefahr, dass eine der beiden Blockiereinrichtungen, insbesondere die gurtbandsensitive Blockiereinrichtung blockiert und ein weiteres Ausziehen des Sicherheitsgurtes 26 aus dem Gurtaufroller 29 verhindert. Ein weiteres Umklappen und insbesondere ein Versenken des Fahrzeugsitzes im Bodenbereich wird dadurch erschwert oder vom Fahrzeuginsassen aufgrund mehrmaliger Fehlversuche für unmöglich erachtet.

Durch die oben erläuterten Hemmungseinrichtungen, insbesondere durch die Hemmungseinrichtung für die gurtbandsensitive Blockiereinrichtung, wird im Schwenkbereich des klappbaren Sitzes und insbesondere im Schwenkbereich der Gurtschlösser 27 und 28, insbesondere des an der Seite des Gurtaufrollers 29 befindlichen Gurtschlosses ein Blockieren der gurtbandsensitiven Blockiereinrichtung und der fahrzeugsensitiven Blockiereinrichtung verhindert.

Es folgt eine Aufstellung von nicht erfinderischen Ausführungsbeispielen.
Ausführungsbeispiel 1: Gurtaufroller für einen Fahrzeugsicherheitsgurt mit einer Gurtspule, auf welcher der Sicherheitsgurt beim Bandaufwickeln aufgerollt und von welcher der Sicherheitsgurt bei Gurtbandauszug abgewickelt werden kann, einer gurtbandsensitiven Blockiereinrichtung, welche bei einem Gurtbandauszug mit überhöhter Beschleunigung den Gurtbandauszug blockiert, und/oder einer fahrzeugsensitiven Blockiereinrichtung, welche bei überhöhter Fahrzeugbeschleunigung oder Verzögerung den Gurtbandauszug blockiert, **dadurch gekennzeichnet, dass** mit der Gurtspule (2) eine Hemmungseinrichtung (1) in Drehverbindung steht, welche am Anfang des Gurtbandauszugs während einer bestimmten Gurtbandauszugslänge die Aktivierung der gurtbandsensitiven Blockiereinrichtung (12) verhindert.
Ausführungsbeispiel 2: Gurtaufroller mit den Merkmalen des Ausführungsbeispiels 1, **dadurch gekennzeichnet, dass** die Hemmungseinrichtung (1) mit Untersetzung mit der Gurtspule (2) in Drehverbindung steht.
Ausführungsbeispiel 3: Gurtaufroller mit den Merkmalen des Ausführungsbeispiels 1, **dadurch gekennzeichnet, dass** die Hemmungseinrichtung (1) eine um die Gurtspulenachse (6) mit Untersetzung bewegte Kreissegementbahn (3) aufweist, entlang welcher eine mit der Gurtspule (2) mitdrehende gurtbandsensitive Sperreinrichtung, insbesondere Klinke (4) zum Verhindern einer die Blockierung einleitenden Bewegung, insbesondere Klinkenbewegung geführt ist.
Ausführungsbeispiel 4: Gurtaufroller mit den Merkmalen wenigstens eines der Ausführungsbeispiele 1 bis 3,
   **dadurch gekennzeichnet, dass** die Hemmungseinrichtung (1) als kreissegmentförmige Führungsbahn eine Anschlagfläche (3) aufweist, entlang welcher zur Verhinderung der die Blockierung einleitenden Klinkenbewegung die gurtbandsensitive Klinke (4) mit Eingriff oder anliegend geführt ist.
Ausführungsbeispiel 5: Gurtaufroller mit den Merkmalen wenigstens eines der Ausführungsbeispiele 1 bis 4,
   **dadurch gekennzeichnet, dass** die bestimmte Gurtbandauszugslänge, während welcher die Blockierung verhindert wird, etwa drei bis fünf Gurtspulenumdrehungen entspricht.
Ausführungsbeispiel 6: Gurtaufroller mit den Merkmalen wenigstens eines der Ausführungsbeispiele 1 bis 5,
   **dadurch gekennzeichnet, dass** die Hemmungseinrichtung (1) unmittelbar bei Beginn des Bandauszugs die Aktivierung der gurtbandsensitiven Blockiereinrichtung (12) verhindert.
Ausführungsbeispiel 7: Gurtaufroller mit den Merkmalen wenigstens eines der Ausführungsbeispiele 1 bis 6,
   **dadurch gekennzeichnet, dass** zwischen Gurtspule (2) und Hemmungseinrichtung (1) ein Untersetzungsgetriebe (5) geschaltet ist, welches die Drehung der Hemmungseinrichtung (1) gegenüber der Drehung der Gurtspule (2) untersetzt.
Ausführungsbespiel 8: Gurtaufroller mit den Merkmalen des Ausführungsbeispiels 3 oder 4,
   **dadurch gekennzeichnet, dass** die Anschlagfläche (3) sich entlang einem Kreissegment um die Gurtspulenachse (6) erstreckt und mit der vom Untersetzungsgetriebe (5) erzeugten, untersetzten Drehzahl mit der Gurtspule (2) um die Gurtspulenachse (6) in Drehantriebsverbindung steht.
Ausführungsbeispiel 9: Gurtaufroller mit den Merkmalen wenigstens eines der Ausführungsbeispiele 1 bis 8,
   **dadurch gekennzeichnet, dass** das Untersetzungsgetriebe (5) die Drehbewegung der Gurtspule (2) auf die kreissegmentförmige Führungsbahn (3) überträgt.
Ausführungsbeispiel 10: Gurtaufroller mit den Merkmalen wenigstens eines der Ausführungsbeispiele 1 bis 9,
   **dadurch gekennzeichnet, dass** die Hemmungseinrichtung (1) zwischen dem Untersetzungsgetriebe (5) und der Gurtspule (2) angeordnet ist.
Ausführungsbeispiel 11: Gurtaufroller mit den Merkmalen wenigstens eines der Ausführungsbeispiele 1 bis 10,
   **dadurch gekennzeichnet, dass** das Untersetzungsgetriebe (5) ein von der Gurtspule (2) angetriebenes Antriebsrad (7) aufweist, welches mit einem mit der Hemmungseinrichtung (1), insbesondere mit der Führungsfläche (3) drehfest verbundenem Steuerrad (8) in Dreheingriff steht.
Ausführungsbeispiel 12: Gurtaufroller mit den Merkmalen wenigstens eines der Ausführungsbeispiele 1 bis 11,
   **dadurch gekennzeichnet, dass** das Antriebsrad (7) als Innenrad und das Steuerrad (8) als Außenrad ausgebildet sind.
Ausführungsbeispiel 13: Gurtaufroller mit den Merkmaleb wenigstens eines der Ausführungsbeispiele 1 bis 12,
   **dadurch gekennzeichnet, dass** das Antriebsrad (7) um die Gurtspulenachse (6) drehbar gelagert ist und das Steuerrad (8) eine exzentrische Bewegung um die Gurtspulenachse (6) ausführt.
Ausführungsbeispiel 14: Gurtaufroller mit den Merkmalen wenigstens eines der Ausführungsbeispiele 10 bis 13,
   **dadurch gekennzeichnet, dass** die Drehbewegung des Antriebsrades (7) über ein Zwischenrad auf das um die Gurtspulenachse (6) drehbare Steuerrad (8) übertragbar ist.
Ausführungsbeispiel 15: Gurtaufroller mit den Merkmalen wenigstens eines der Ausführungsbeispiele 10 bis 14,
   **dadurch gekennzeichnet, dass** das Steuerrad (8) über einen in ein radial sich erstreckendes Langloch (9) eingreifenden Mitnehmerstift (10) mit der kreissegmentförmigen Führungsfläche (3) drehfest verbunden ist.
Ausführungsbeispiel 16: Gurtaufroller mit den Merkmalen wenigstens eines der Ausführungsbeispiele 1 bis 15,
   **dadurch gekennzeichnet, dass** an der gurtbandsensitiven Klinke (4) ein Anschlagelement (11), welches insbesondere als Anschlagstift ausgebildet ist, vorgesehen ist und dass das Anschlagelement (11) an der als Anschlagfläche (3) ausgebildeten Führungsbahn zur Verhinderung der Aktivierung der gurtbandsensitiven Blockiereinrichtung (12) anliegt.
Ausführungsbeispiel 17: Gurtaufroller mit den Merkmalen wenigstens eines der Ausführungsbeispiele 1 bis 16,
   **dadurch gekennzeichnet, dass** die Aktivierung der gurtbandsensitiven Blockiereinrichtung (12) bei vollständig aufgerolltem Sicherheitsgurt durch die Hemmungseinrichtung (1) verhindert ist.
Ausführungsbeispiel 18: Gurtaufroller mit den Merkmalen wenigstens eines der Ausführungsbeispiele 1 bis 17,
   **dadurch gekennzeichnet, dass** die Aktivierung der gurtbandsensitiven Blockiereinrichtung (12) bis zu einer Bandauszugslänge, welche annähernd für das Angurten eines Fahrzeuginsassen erforderlich ist, oder bis zu einer geringeren Bandauszugslänge verhindert ist.
Ausführungsbeispiel 19: Gurtaufroller für einen Sicherheitsgurt mit einer Gurtspule auf welche der Sicherheitsgurt beim Bandaufwickeln aufgerollt und von welcher der Sicherheitsgurt bei Gurtbandauszug abgewickelt werden kann, einer gurtbandsensitiven Blockiereinrichtung, welche bei einem Gurtbandauszug mit überhöhter Beschleunigung den Gurtbandauszug blockiert, und/oder einer fahrzeugsensitiven Blockiereinrichtung, welche bei überhöhter Beschleunigung oder -verzögerung den Gurtbandauszug blockiert, insbesondere mit einem der Merkmale der Ausführungsbeispiele 1 bis 18, **dadurch gekennzeichnet, dass** durch die Drehung der Gurtspule (2) über ein zweites Getriebe (17, 19, 20) die Bewegung einer zweiten Hemmungseinrichtung (21, 22), welche die Aktivierung der fahrzeugsensitiven Blockiereinrichtung (23) am Anfang des Gurtbandauszugs während einer bestimmten Gurtbandauszugslänge verhindert, gesteuert ist.
Ausführungsbeispiel 20: Gurtaufroller mit den Merkmalen des Ausführungsbeispiels 19, **dadurch gekennzeichnet, dass** das zweite Getriebe (17, 19, 20) ein Antriebsrad (19) aufweist, welches von einem drehfest mit der Gurtspule (2) verbundenem Wellenteil (24) angetrieben ist.
Ausführungsbeispiel 21: Gurtaufroller mit den Merkmalen wenigstens eines der Ausführungsbeispiele 1 bis 20, **dadurch gekennzeichnet, dass** auch das Antriebsrad (7) des der Hemmungseinrichtung für die gurtbandsensitive Blockiereinrichtung (12) zugeordneten Getriebes (5) vom Wellenteil (24) angetrieben ist.
Ausführungsbeispiel 22: Gurtaufroller mit den Merkmalen des Ausführungsbeispiels 20, **dadurch gekennzeichnet, dass** das Antriebsrad (19) des zweiten Getriebes (17, 19, 20) durch das gemeinsame Wellenteil (24) exzentrisch um die Gurtspulenachse (6) angetrieben ist und in eine Innenverzahnung (20) an einem Gehäuseteil (25) eingreift.
Ausführungsbeispiel 23: Gurtaufroller mit den Merkmalen wenigstens eines der Ausführungsbeispiele 19 bis 22, **dadurch gekennzeichnet, dass** das zweite Getriebe (17, 19, 20) als Untersetzungsgetriebe ausgebildet ist.
Ausführungsbeispiel 24: Gurtaufroller mit den Merkmalen wenigstens eines der Ausführungsbeispiele 19 bis 23, **dadurch gekennzeichnet, dass** die zweite Hemmungseinrichtung (21, 22) eine um die Gurtspulenachse (6) durch das zweite Antriebsrad (19) angetriebene kreissegmentförmige Steuerfläche (21) aufweist, welche mit einem die fahrzeugsensitive Blockiereinrichtung (23) inaktiv stellendem Betätigungselement (22) zusammenwirkt.
Ausführungsbeispiel 25: Gurtaufroller mit den Merkmalen des Ausführungsbeispiels 24, **dadurch gekennzeichnet, dass** die Steuerfläche (21) um die Gurtspulenachse (6) drehbar ist.
Ausführungsbeispiel 26: Gurtaufroller mit den Merkmalen wenigstens eines der Ausführungsbeispiele 1 bis 25, **dadurch gekennzeichnet, dass** das Wellenteil (24) am Gehäuseteil (25) drehbar gelagert ist und in Drehantriebsverbindung mit der Gurtspule (2) steht.
Ausführungsbeispiel 27: Gurtaufroller mit den Merkmalen wenigstens eines der Ausführungsbeispiele 1 bis 26, **dadurch gekennzeichnet, dass** am Gehäuseteil (25) und am gemeinsamen Wellenteil (24) die um die Gurtspulenachse (6) drehbaren Bestandteile der Hemmungseinrichtung (1) für die gurtbandsensitive Blockiereinrichtung (12) und des zugeordneten Getriebes (5) und/oder der Hemmungseinrichtung (21, 22) für die fahrzeugsensitive Blockiereinrichtung (23) und des zugeordneten Getriebes (17, 19, 20) gelagert sind.
Ausführungsbeispiel 28: Gurtaufroller mit den Merkmalen wenigstens eines der Ausführungsbeispiele 1 bis 27, **dadurch gekennzeichnet, dass** am Gehäuseteil (25) ferner eine Blockierinnenverzahnung (16), in welche die gurtbandsensitive Sperreinrichtung oder Klinke (4) im Eingriff bringbar ist, vorgesehen.
Ausführungsbeispiel 29: Gurtaufroller mit den Merkmalen wenigstens eines der Ausführungsbeispiele 1 bis 28, **dadurch gekennzeichnet, dass** durch die auf die fahrzeugsensitive Blockiereinrichtung (23) wirkende Hemmungseinrichtung (21, 22) und/oder durch die auf die gurtbandsensitive Blockiereinrichtung (12) wirkende Hemmungseinrichtung (1) eine geräuschmindernde oder geräuschdämmende Bewegungseinschränkung an der jeweiligen Blockiereinrichtung vorgesehen ist.
Ausführungsbeispiel 30: Gurtaufroller mit den Merkmalen wenigstens eines der Ausführungsbeispiele 1 bis 29, **dadurch gekennzeichnet, dass** am Sicherheitsgurt (26) zwei Steckzonen (50, 51) vorgesehen sind, welche in an beiden Seiten eines Fahrzeugsitzes vorgesehene und beim Umklappen oder Schwenken der Sitzrückenlehne oder des Fahrzeugsitzes mit verschwenkbaren Gurtschlössern (27, 28) einsteckbar sind, wobei beim Umklappen oder Schwenken der Sitzrückenlehne oder des Fahrzeugsitzes die gurtbandsensitive Blockiereinrichtung (12) und/oder die fahrzeugsensitive Blockiereinrichtung (23) durch die jeweils zugeordnete Hemmungseinrichtung (1 und/oder 21, 22) inaktiv gehalten sind.

### Bezugszeichenliste

- 1: Hemmungseinrichtung
- 2: Gurtspule
- 3: Anschlagfläche
- 4: gurtbandsensitive Klinke
- 5: Untersetzungsgetriebe
- 6: Gurtspulenachse
- 7: Antriebsrad
- 8: Steuerrad
- 9: Langloch
- 10: Mitnehmerstift
- 11: Anschlagelement (Anschlagstift)
- 12: gurtbandsensitive Blockiereinrichtung
- 13: Klinkenrad
- 14: Trägheitsmasse
- 15: Feder
- 16: Blockierinnenverzahnung
- 17: Antriebswelle
- 18: Ringlager
- 19: Antriebsrad
- 20: Innenzahnkranz
- 21: Steuerfläche (Steuerkante)
- 22: Betätigungselement
- 23: fahrzeugsensitive Blockiereinrichtung
- 24: gemeinsames Wellenteil
- 25: Gehäuseteil
- 26: Sicherheitsgurt
- 27: Gurtschloss
- 28: Gurtschloss
- 29: Gurtaufroller
- 30: Steuerscheibe
- 31: Feder
- 32: Steuerabgriff
- 33: Eingriffsteil am Fahrzeugsensor
- 34: Eingriffsteil am Klinkenrad
- 35: Drehlager
- 36: Steuerscheibe
- 37: Mitnehmerstift
- 38: Langloch
- 39: Ausnehmung
- 40: Gehäuseausnehmung
- 41: Rahmen
- 42: Umlenkeinrichtung
- 43: Exzenter
- 44: exzentrische Führungsfläche
- 45: Sperrklinke
- 46: Trägheitsmasse
- 47: Ausnehmung
- 48: zylindrischer Vorsprung
- 49: Achsstummel
- 50: Steckzunge
- 51: Steckzunge

## Patentansprüche

1. Gurtaufroller für einen Sicherheitsgurt mit einer Gurtspule auf welche der Sicherheitsgurt beim Bandaufwickeln aufgerollt und von welcher der Sicherheitsgurt bei Gurtbandauszug abgewickelt werden kann, einer gurtbandsensitiven Blockiereinrichtung, welche bei einem Gurtbandauszug mit überhöhter Beschleunigung den Gurtbandauszug blockiert, und einer fahrzeugsensitiven Blockiereinrichtung, welche bei überhöhter Beschleunigung oder Verzögerung den Gurtbandauszug blockiert, wobei durch die Drehung der Gurtspule (2) über ein Getriebe (17, 19, 20) die Bewegung einer zweiten Hemmungseinrichtung (21, 22), welche die Aktivierung der fahrzeugsensitiven Blockiereinrichtung (23) am Anfang des Gurtbandauszugs während einer bestimmten Gurtbandauszugslänge verhindert, gesteuert ist, **dadurch gekennzeichnet, dass** mit der Gurtspule (2) eine erste Hemmungseinrichtung (1) in Drehverbindung steht, welche am Anfang des Gurtbandauszugs während einer bestimmten Gurtbandauszugslänge die Aktivierung der gurtbandsensitiven Blockiereinrichtung (12) verhindert.

2. Gurtaufroller nach Anspruch 1, **dadurch gekennzeichnet, dass** das Getriebe (17, 19, 20) ein Antriebsrad (19) aufweist, welches von einem drehfest mit der Gurtspule (2) verbundenem Wellenteil (24) angetrieben ist.

3. Gurtaufroller nach Anspruch 2, **dadurch gekennzeichnet, dass** das Antriebsrad (19) des Getriebes (17, 19, 20) durch ein gemeinsames Wellenteil (24) exzentrisch um die Gurtspulenachse (6) angetrieben ist und in eine Innenverzahnung (20) an einem Gehäuseteil (25) eingreift.

4. Gurtaufroller nach einem der Ansprüche 1 bis 3, **dadurch gekennzeichnet, dass** das Getriebe (17, 19, 20) als Untersetzungsgetriebe ausgebildet ist.

5. Gurtaufroller nach einem der Ansprüche 1 bis 4, **dadurch gekennzeichnet, dass** die zweite Hemmungseinrichtung (21, 22) eine um die Gurtspulenachse (6) durch das Antriebsrad (19) angetriebene kreissegmentförmige Steuerfläche (21) aufweist, welche mit einem die fahrzeugsensitive Blockiereinrichtung (23) inaktiv stellendem Betätigungselement (22) zusammenwirkt.

6. Gurtaufroller nach einem der Ansprüche 1 bis 5, **dadurch gekennzeichnet, dass** die Steuerfläche (21) um die Gurtspulenachse (6) drehbar ist.

7. Gurtaufroller nach Anspruch 3, **dadurch gekennzeichnet, dass** das Wellenteil (24) am Gehäuseteil (25) drehbar gelagert ist und in Drehantriebsverbindung mit der Gurtspule (2) steht.

8. Gurtaufroller nach Anspruch 3, **dadurch gekennzeichnet, dass** am Gehäuseteil (25) und am gemeinsamen Wellenteil (24) die um die Gurtspulenachse (6) drehbaren Bestandteile der Hemmungseinrichtung (21, 22) für die fahrzeugsensitive Blockiereinrichtung (23) und des zugeordneten Getriebes (17, 19, 20) gelagert sind.

9. Gurtaufroller nach Anspruch 3, **dadurch gekennzeichnet, dass** durch die auf die fahrzeugsensitive Blockiereinrichtung (23) wirkende Hemmungseinrichtung (21, 22) eine geräuschmindernde oder geräuschdämmende Bewegungseinschränkung an der jeweiligen Blockiereinrichtung vorgesehen ist.

10. Gurtaufroller nach Anspruch 3, **dadurch gekennzeichnet, dass** am Sicherheitsgurt (26) zwei Steckzonen (50, 51) vorgesehen sind, welche in an beiden Seiten eines Fahrzeugsitzes vorgesehene und beim Umklappen oder Schwenken der Sitzrückenlehne oder des Fahrzeugsitzes mit verschwenkbaren Gurtschlössern (27, 28) einsteckbar sind, wobei beim Umklappen oder Schwenken der Sitzrückenlehne oder des Fahrzeugsitzes die fahrzeugsensitive Blockiereinrichtung (23) durch die zweite Hemmungseinrichtung (21, 22) inaktiv gehalten wird.

11. Gurtaufroller nach Anspruch 1, **dadurch gekennzeichnet, dass** die erste Hemmungseinrichtung (1) mit Untersetzung mit der Gurtspule (2) in Drehverbindung steht.

12. Gurtaufroller nach Anspruch 1, **dadurch gekennzeichnet, dass** die erste Hemmungseinrichtung (1) eine um die Gurtspulenachse (6) mit Untersetzung bewegte Kreissegementbahn (3) aufweist, entlang welcher eine mit der Gurtspule (2) mitdrehende gurtbandsensitive Sperreinrichtung, insbesondere Klinke (4) zum Verhindern einer die Blockierung einleitenden Bewegung, insbesondere Klinkenbewegung geführt ist.

13. Gurtaufroller nach einem der Ansprüche 1 bis 12,
**dadurch gekennzeichnet, dass** die erste Hemmungseinrichtung (1) als kreissegmentförmige Führungsbahn eine Anschlagfläche (3) aufweist, entlang welcher zur Verhinderung der die Blockierung einleitenden Klinkenbewegung die gurtbandsensitive Klinke (4) mit Eingriff oder anliegend geführt ist.

14. Gurtaufroller nach einem der Ansprüche 1 bis 12,
**dadurch gekennzeichnet, dass** das Untersetzungsgetriebe (5) ein von der Gurtspule (2) angetriebenes Antriebsrad (7) aufweist, welches mit einem mit der ersten Hemmungseinrichtung (1), insbesondere mit der Führungsfläche (3) drehfest verbundenem Steuerrad (8) in Dreheingriff steht und das Steuerrad (8) über einen in ein radial sich erstreckendes Langloch (9) eingreifenden Mitnehmerstift (10) mit der kreissegmentförmigen Führungsfläche (3) drehfest verbunden ist.

## Claims

1. A seat belt retractor for a seat belt, having a belt reel onto which the seat belt is wound when the strap is reeled in and from which the seat belt can be unwound when the belt strap is pulled out, a belt strap-sensitive blocking means which when the belt strap is pulled out with excessive acceleration blocks extension of the belt strap, and a vehicle-sensitive blocking means which blocks extension of the belt strap upon excessive acceleration or deceleration, wherein
the movement of a second inhibition means (21, 22) which prevents activation of the vehicle-sensitive blocking means (23) at the beginning of pulling out the belt strap over a specific belt extension length is controlled due to the rotation of the belt reel (2) by means of a gear mechanism (17, 19, 20), **characterised in that** a first inhibition means (1) is in a rotary connection with the belt reel (2), which means at the beginning of extension of the belt prevents activation of the belt strap-sensitive blocking means (12) over a specific belt extension length.

2. A seat belt retractor according to claim 1, **characterised in that** the gear mechanism (17, 19, 20) has a drive wheel (19) which is driven by a shaft part (24) connected non-rotationally to the belt reel (2).

3. A seat belt retractor according to claim 2, **characterised in that** the drive wheel (19) of the gear mechanism (17, 19, 20) is driven eccentrically about the belt reel axis (6) by a common shaft part (24) and engages in internal teeth (20) on a housing part (25).

4. A seat belt retractor according to one of claims 1 to 3, **characterised in that** the gear mechanism (17, 19, 20) is designed as a reduction gear.

5. A seat belt retractor according to one of claims 1 to 4, **characterised in that** the second inhibition means (21, 22) has a control face (21) in the form of a segment of a circle which is driven about the belt reel axis (6) by the drive wheel (19), which face cooperates with an actuating element (22) which renders the vehicle-sensitive blocking means (23) inactive.

6. A seat belt retractor according to one of claims 1 to 5, **characterised in that** the control face (21) is rotatable about the belt reel axis (6).

7. A seat belt retractor according to claim 3, **characterised in that** the shaft part (24) is mounted rotatably on the housing part (25) and is in a rotary drive connection with the belt reel (2).

8. A seat belt retractor according to claim 3, **characterised in that** those components of the inhibition means (21, 22) for the vehicle-sensitive blocking means (23) and of the associated gear mechanism (17, 19, 20) which are rotatable about the belt reel axis (6) are mounted on the housing part (25) and on the common shaft part (24).

9. A seat belt retractor according to claim 3, **characterised in that** a noise-reducing or noise-deadening movement restriction means is provided on the respective blocking means by the inhibition means (21, 22) which acts on the vehicle-sensitive blocking means (23).

10. A seat belt retractor according to claim 3, **characterised in that** two insertion zones (50, 51) which can be inserted into seat belt buckles (27, 28) which are provided on both sides of a vehicle seat and when the seat backrest or the vehicle seat is folded over or pivoted can be pivoted with it are provided on the seat belt (26), wherein when the seat backrest or the vehicle seat is folded over or pivoted the vehicle-sensitive blocking means (23) is kept inactive by the second inhibition means (21, 22).

11. A seat belt retractor according to claim 1, **characterised in that** the first inhibition means (1) with reduction is in a rotary connection with the belt reel (2).

12. A seat belt retractor according to claim 1, **characterised in that** the first inhibition means (1) has a circular-segment track (3) which is moved about the belt reel axis (6) with reduction, along which track is guided a belt strap-sensitive locking means, in particular pawl (4), which co-rotates with the belt reel (2), for preventing a movement which initiates blocking, in particular pawl movement.

13. A seat belt retractor according to one of claims 1 to 12, **characterised in that** the first inhibition means (1) has as guideway in the form of a segment of a circle a stop face (3) along which in order to prevent the pawl movement which initiates the blocking the belt strap-sensitive pawl (4) is guided with engagement or abutting.

14. A seat belt retractor according to one of claims 1 to 12, **characterised in that** the reduction gear (5) has a drive wheel (7) driven by the belt reel (2), which wheel is in rotary engagement with a control wheel (8) which is non-rotationally connected to the first inhibition means (1), in particular to the guide face (3), and the control wheel (8) is non-rotationally connected via an entraining pin (10) which engages in a radially extending elongate hole (9) to the guide face (3) in the form of a segment of a circle.

## Revendications

1. Enrouleur pour une ceinture de sécurité, ayant une bobine de ceinture sur laquelle la ceinture de sécurité est enroulée lors de l'enroulement de sangle et de laquelle la ceinture de sécurité est déroulée lors de l'extraction de la sangle de la ceinture, un dispositif de blocage, qui est sensible à la sangle de la ceinture et qui bloque une extraction de la sangle de la ceinture à une accélération excessivement grande de l'extraction de la sangle de la ceinture et un dispositif de blocage, qui est sensible au véhicule et qui bloque l'extraction de la sangle de la ceinture à une accélération ou à une décélération excessivement grande,
dans lequel,
par la rotation de la bobine (2) de la ceinture, par l'intermédiaire d'une transmission (17, 19, 20), est commandé le déplacement d'un deuxième dispositif (21, 22) d'arrêt, qui empêche l'activation du dispositif (23) de blocage sensible au véhicule au début de l'extraction de la sangle de la ceinture, pendant une longueur d'extraction déterminée de la sangle de la ceinture, **caractérisé en ce qu'**avec la bobine (2) de ceinture est en liaison de rotation un premier dispositif (1) d'arrêt, qui, au début de l'extraction de la sangle de la ceinture, empêche l'activation du dispositif (12) de blocage sensible à la sangle de la ceinture, pendant une longueur d'extraction déterminée de la sangle de la ceinture.

2. Enrouleur de ceinture suivant la revendication 1, **caractérisé en ce que** la transmission (17, 19, 20) a une roue (19) de transmission, qui est entraînée par une partie (24) d'arbre solidaire en rotation de la bobine (2) de la ceinture.

3. Enrouleur de ceinture suivant la revendication 2, **caractérisé en ce que** la roue (19) d'entraînement de la transmission (17, 19, 20) est entraînée, de manière excentrée autour de l'axe (6) de la bobine de la ceinture, par une partie (24) d'arbre commune et engrène dans une denture (20) intérieure sur une partie (25) de boîtier.

4. Enrouleur de ceinture suivant l'une des revendications 1 à 3, **caractérisé en ce que** la transmission (17, 19, 20) est constituée en transmission de réduction.

5. Enrouleur de ceinture suivant l'une des revendications 1 à 4, **caractérisé en ce que** le deuxième dispositif (21, 22) d'arrêt a une surface (21) de commande en forme de segment de cercle entraînée par la roue (19) d'entraînement autour de l'axe (6) de la bobine de la ceinture, surface qui coopère avec un élément (22) d'actionnement rendant inactif le dispositif (23) de blocage sensible au véhicule.

6. Enrouleur de ceinture suivant l'une des revendications 1 à 5, **caractérisé en ce que** la surface (21) de commande peut tourner autour de l'axe (6) de la bobine de la ceinture.

7. Enrouleur de ceinture suivant la revendication 3, **caractérisé en ce que** la partie (24) d'arbre est montée tournante sur la partie (25) de boîtier et est en liaison d'entraînement en rotation avec la bobine (2) de la ceinture.

8. Enrouleur de ceinture suivant la revendication 3, **caractérisé en ce que**, sur la partie (25) du boîtier et sur la partie (24) d'arbre commune sont montés les constituants, pouvant tourner autour de l'axe (6) de la bobine, de la ceinture, du dispositif (21, 22) d'arrêt pour le dispositif (23) de blocage sensible au véhicule et de la transmission (17, 19, 20) associée.

9. Enrouleur de ceinture suivant la revendication 3, **caractérisé en ce que**, par le dispositif (21, 22) d'arrêt, agissant sur le dispositif (23) de blocage sensible au véhicule, est prévue une limitation du déplacement, diminuant le bruit ou amortissant le bruit sur le dispositif de blocage respectif.

10. Enrouleur de ceinture suivant la revendication 3, **caractérisé en ce qu'**il est prévu, sur la ceinture (26) de sécurité, deux zones (50, 51) d'enfichage, qui peuvent être enfichées dans des boucles (27, 28) de ceinture prévues des deux côtés d'un siège du véhicule et pouvant pivoter lors du basculement ou du pivotement du dossier du véhicule ou du siège du véhicule, dans lequel, lors du basculement ou du pivotement du dossier du véhicule ou du siège du véhicule, le dispositif (23) de blocage sensible au véhicule est maintenu inactif par le deuxième dispositif (21, 22) d'arrêt.

11. Enrouleur de ceinture suivant la revendication 1, **caractérisé en ce que** le premier dispositif (1) d'arrêt est en liaison de rotation avec réduction avec la bobine (2) de la ceinture.

12. Enrouleur de ceinture suivant la revendication 1, **caractérisé en ce que** le premier dispositif (1) d'arrêt a une voie (3) en segment de cercle déplacée avec réduction autour de l'axe (6) de la bobine de la ceinture, voie le long de laquelle un dispositif d'arrêt sensible à la sangle de la ceinture et tournant avec la bobine (2) de la ceinture, notamment un cliquet (4), est guidé pour empêcher un déplacement provoquant le blocage, notamment un déplacement de cliquet.

13. Enrouleur de ceinture suivant l'une des revendications 1 à 12, **caractérisé en ce que** le premier dispositif (1) d'arrêt a, comme voie de guidage en forme de segment de cercle, une surface (3) de butée le long de laquelle, pour empêcher le déplacement du cliquet provoquant le blocage, le cliquet (4) sensible à la sangle de la ceinture est guidé avec prise ou application.

14. Enrouleur de ceinture suivant l'une des revendications 1 à 12, **caractérisé en ce que** la transmission (5) avec réduction a une roue (7) d'entraînement, qui est entraînée par la bobine (2) de la ceinture et qui est en prise de rotation avec une roue (8) de commande solidaire en rotation du premier dispositif (1) d'arrêt, notamment de la surface (3) de guidage et la roue (8) de commande est solidaire en rotation de la surface (3) de guidage en forme de segment de cercle par un ergot (10) d'entraîneur pénétrant dans une boutonnière (9) s'étendant radialement.
